# EUROPÄISCHE PATENTSCHRIFT

(11) **EP 4 093 643 B1**
(45) Veröffentlichungstag und Bekanntmachung des Hinweises auf die Patenterteilung: **13.05.2026**
(21) Anmeldenummer: 21716608.1
(22) Anmeldetag: 24.03.2021
(51) Int. Cl.: B60W 50/14, B60W 50/02

(54) **VERFAHREN ZUM BETREIBEN EINES ZUMINDEST TEILAUTOMATISIERT FAHRENDEN FAHRZEUGS UND FAHRZEUG**
METHOD FOR OPERATING AN AT LEAST PARTIALLY SELF-DRIVING VEHICLE, AND VEHICLE
PROCÉDÉ PERMETTANT LE FONCTIONNEMENT D'UN VÉHICULE AU MOINS PARTIELLEMENT AUTONOME, ET VÉHICULE

(30) Priorität: 24.03.2020 DE 102020203819
(43) Veröffentlichungstag der Anmeldung: 30.11.2022
(73) Patentinhaber: VOLKSWAGEN AKTIENGESELLSCHAFT, 38440 Wolfsburg (DE)
(72) Erfinder: KAPOOR, Nikhil, 38440 Wolfsburg (DE); SCHLICHT, Peter, 38442 Wolfsburg (DE); VARGHESE, Serin, 38126 Braunschweig (DE)
(86) Internationale Anmeldenummer: PCT/EP2021/057535
(87) Internationale Veröffentlichungsnummer: WO 2021/191256

(56) Entgegenhaltungen:
- US-A1- 2019 135 300
- BAKHTI YASSINE ET AL: "DDSA: A Defense Against Adversarial Attacks Using Deep Denoising Sparse Autoencoder", IEEE ACCESS, vol. 7, 4 October 2019 (2019-10-04), pages 160397 - 160407, XP011754256, DOI: 10.1109/ACCESS.2019.2951526
- BHAVANI THURAISINGHAM ET AL: "MagNet : A Two-Pronged Defense against Adversarial Examples", PROCEEDINGS OF THE 2017 ACM SIGSAC CONFERENCE ON COMPUTER AND COMMUNICATIONS SECURITY , CCS '17, 30 October 2017 (2017-10-30), New York, New York, USA, pages 135 - 147, XP055690792, ISBN: 978-1-4503-4946-8, DOI: 10.1145/3133956.3134057
- MENGSHI ZHANG ET AL: "DeepRoad: GAN-based metamorphic testing and input validation framework for autonomous driving systems", PROCEEDINGS OF THE 33RD ACM/IEEE INTERNATIONAL CONFERENCE ON AUTOMATED SOFTWARE ENGINEERING , ASE 2018, ACM PRESS, NEW YORK, NEW YORK, USA, 3 September 2018 (2018-09-03), pages 132 - 142, XP058415235, ISBN: 978-1-4503-5937-5, DOI: 10.1145/3238147.3238187

## Beschreibung

Die Erfindung betrifft ein Verfahren zum Betreiben eines zumindest teilautomatisiert fahrenden Fahrzeugs und ein Fahrzeug.

Maschinelles Lernen, beispielsweise auf Grundlage von Neuronalen Netzen, hat großes Potenzial für eine Anwendung in modernen Fahrerassistenzsystemen und automatisiert fahrenden Fahrzeugen. Auf tiefen Neuronalen Netzen basierende Funktionen verarbeiten hierbei Sensordaten (zum Beispiel von Kameras, Radar- oder Lidarsensoren), um hieraus relevante Informationen abzuleiten. Diese Informationen umfassen zum Beispiel eine Art und eine Position von Objekten in einem Umfeld des Kraftfahrzeugs, ein Verhalten der Objekte oder eine Fahrbahngeometrie oder -topologie.

Ein wesentliches Merkmal bei der Entwicklung von tiefen Neuronalen Netzen (dem Training) liegt im rein datengetriebenen Parameterfitting ohne Experteneingriff: Hierbei wird eine Abweichung einer Ausgabe (für eine gegebene Parametrierung) eines Neuronalen Netzes von einer Grundwahrheit (engl. ground truth) bestimmt (der sogenannte Loss). Die hierbei verwendete Lossfunktion wird in einer Weise gewählt, dass die Parameter des Neuronalen Netzes differenzierbar von dieser abhängen. Im Rahmen des Gradientenabstiegsverfahrens werden in jedem Trainingsschritt die Parameter des Neuronalen Netzes in Abhängigkeit der Ableitung der (auf mehreren Beispielen ermittelten) Abweichung angepasst. Diese Trainingsschritte werden sehr oft wiederholt, bis sich der Loss nicht mehr verringert.

Bei diesem Vorgehen werden die Parameter des Neuronalen Netzes ohne eine Experteneinschätzung oder eine semantisch motivierte Modellierung ermittelt. Neuronale Netze besitzen jedoch auch Nachteile. So können beispielsweise auf adversarialen Störungen in den Sensordaten/Eingangsdaten basierende Angriffe dazu führen, dass trotz eines semantisch nicht veränderten Inhalts in den erfassten Sensordaten eine Fehlklassifizierung bzw. eine falsche semantische Segmentierung erfolgt. Ferner ist eine Güte eines Neuronalen Netzes stets nur dann hoch, wenn die Eingangsdaten aus der Datendomäne stammen, auf die das Neuronale Netz trainiert wurde (d.h. bei In-Sample-Daten). Stammen die Eingangsdaten hingegen aus einer anderen Datendomäne (Out-of-Sample-Daten), so kann die Güte einer Ausgabe des Neuronalen Netzes sinken.

Insbesondere im Bereich des automatisierten Fahrens, in dem hohe Sicherheitsanforderungen gefordert sind, müssen Out-of-Sample-Daten erkannt werden können, bevor eine Weiterverarbeitung erfolgt.

Aus Chuan Guo et al., Countering Adversarial Images Using Input Transformations, arXiv:1711.00117v3 [cs.CV], 25. Jan. 2018, https://arxiv.org/pdf/1711.00117.pdf, sind ein Quilting-Verfahren und ein Total Variance Minimization-Verfahren zum Beseitigen von adversarialen Störungen in Bilddaten bekannt.

Aus Y. Bakhti et al., DDSA: A Defense Against Adversarial Attacks Using Deep Denoising Sparse Autoencoder, IEEE Access, Vol. 7, S. 160397-160407, 2019, doi: 10.1109/ACCESS.2019.2951526, ist ein Verfahren zur Verteidigung gegen adversariale Angriffe bekannt.

Aus D. Meng und H. Chen, MagNet: a Two-Pronged Defense against Aversarial Examples, Proc. of the 2017 ACM SIGSAC Conference on Computer and Communication Security, CCS '17, 30. Oktober 2017, S. 135-147, New York, USA, DOI: 10.1145/3133956.3134057, ist ein Verfahren zur Verteidigung gegen adversariale Angriffe bekannt.

Aus M. Zhang et al., DeepRoad: GAN-Based Metamorphic Testing and Input Validation Framework for Autonomous Driving Systems, Proc. of the 33rd ACM/IEEE International Conference on Automated Software Engineering, ASE 2018, ACM Press, New York, USA, 3. September 2018, S. 132-142, DOI: 10.1145/3238147.3238187, ist ein Verfahren zum Überprüfen von Eingangsdaten eines Autonomen Fahrsystems bekannt.

Aus der US 2019/0135300 A1 sind ein Verfahren und eine Vorrichtung zur unüberwachten multimodalen Erkennung von Anomalien für autonome Fahrzeuge bekannt. Ein Beispiel beinhaltet das Erhalten von ersten Sensordaten von einem ersten Sensor und zweiten Sensordaten von einem zweiten Sensor, wobei der erste Sensor eines ersten Sensortyps anders ist als ein zweiter Sensortyp des zweiten Sensors; Erzeugen erster codierter Sensordaten basierend auf den ersten Sensordaten und zweiter codierter Sensordaten basierend auf den zweiten Sensordaten; Erzeugen einer kontextbezogenen fusionierten Sensordatendarstellung der ersten und zweiten Sensordaten basierend auf den ersten und zweiten codierten Sensordaten; Generieren erster und zweiter rekonstruierter Sensordaten basierend auf der kontextbezogenen fusionierten Sensordatendarstellung; Bestimmen einer Abweichungsschätzung basierend auf den ersten und zweiten rekonstruierten Sensordaten, wobei die Abweichungsschätzung repräsentativ für eine Abweichung zwischen: den ersten rekonstruierten Sensordaten und den ersten Sensordaten ist; und Erfassen einer Anomalie in der Abweichungsschätzung, wobei die Anomalie einen Fehler anzeigt, der dem ersten Sensor zugeordnet ist.

Der Erfindung liegt die Aufgabe zu Grunde, ein Verfahren zum Betreiben eines zumindest teilautomatisiert fahrenden Fahrzeugs und ein Fahrzeug zu schaffen, bei denen Out-of-Sample-Daten, insbesondere hervorgerufen durch adversariale Störungen, erkannt werden können und nach Erkennen darauf reagiert werden kann.

Die Aufgabe wird erfindungsgemäß durch ein Verfahren mit den Merkmalen des Patentanspruchs 1 und ein Fahrzeug mit den Merkmalen des Patentanspruchs 9 gelöst. Vorteilhafte Ausgestaltungen der Erfindung ergeben sich aus den Unteransprüchen.

Es wird ein Verfahren zum Betreiben eines zumindest teilautomatisiert fahrenden Fahrzeugs zur Verfügung gestellt, wobei Sensordaten mittels mindestens eines Sensors erfasst werden, wobei die erfassten Sensordaten mittels eines Rekonstruktionsverfahrens rekonstruiert werden, wobei die erfassten Sensordaten und die rekonstruierten Sensordaten jeweils einer maschinenlerngestützten Wahrnehmungsfunktion zugeführt werden, wobei zwischen Ausgaben, die jeweils mittels der Wahrnehmungsfunktion erzeugt werden, mittels eines Distanzmaßes eine Distanz bestimmt wird, wobei die bestimmte Distanz mit mindestens einem vorgegebenen Schwellenwert verglichen wird, und wobei mindestens eine Sicherheitsmaßnahme durchgeführt wird, wenn die bestimmte Distanz den mindestens einen vorgegebenen Schwellenwert überschreitet.

Ferner wird insbesondere ein Fahrzeug geschaffen, wobei das Fahrzeug zumindest teilautomatisiert gefahren wird, umfassend mindestens einen Sensor, wobei der mindestens eine Sensor dazu eingerichtet ist, Sensordaten zu erfassen; und eine Steuerungseinrichtung, wobei die Steuerungseinrichtung dazu eingerichtet ist, eine maschinenlerngestützte Wahrnehmungsfunktion bereitzustellen, die erfassten Sensordaten mittels eines Rekonstruktionsverfahrens zu rekonstruieren, die erfassten Sensordaten und die rekonstruierten Sensordaten jeweils der Wahrnehmungsfunktion zuzuführen, zwischen Ausgaben, die jeweils mittels der Wahrnehmungsfunktion erzeugt werden, mittels eines Distanzmaßes eine Distanz zu bestimmen, die bestimmte Distanz mit mindestens einem vorgegebenen Schwellenwert zu vergleichen, und mindestens eine Sicherheitsmaßnahme durchzuführen, wenn die bestimmte Distanz den mindestens einen vorgegebenen Schwellenwert überschreitet.

Das Verfahren und das Fahrzeug ermöglichen es, Out-of-Sample-Daten zu erkennen und nach dem Erkennen mindestens eine Sicherheitsmaßnahme zu ergreifen. Hierzu werden erfasste Sensordaten mittels eines Rekonstruktionsverfahrens rekonstruiert. Die erfassten Sensordaten und die rekonstruierten Sensordaten werden anschließend jeweils der maschinenlerngestützten Wahrnehmungsfunktion zugeführt. Handelt es sich beispielsweise bei den Sensordaten um erfasste Kamerabilder und führt die Wahrnehmungsfunktion beispielsweise eine semantische Segmentierung durch, so wird eine semantische Segmentierung einmal an dem ursprünglichen Kamerabild durchgeführt und einmal an einem rekonstruierten Kamerabild. Zwischen den jeweils mittels der Wahrnehmungsfunktion erzeugten Ausgaben wird mittels eines Distanzmaßes eine Distanz bestimmt. Die bestimmte Distanz wird mit mindestens einem Schwellenwert verglichen. Überschreitet die bestimmte Distanz den mindestens einen Schwellenwert, so ist dies ein Zeichen dafür, dass Out-of-Sample-Daten vorliegen. Die Ursache kann hierbei sowohl ein gezielter Angriff in Form einer in den Sensordaten enthaltenen adversarialen Störung oder außerhalb der Datendomäne liegende Sensordaten sein, beispielsweise in Form von sogenannten "Corner Cases", also sehr selten auftretenden Ausprägungen der Sensordaten bzw. eines darin abgebildeten Inhalts. In jedem Fall liegen die Daten außerhalb der Datendomäne, in der die Wahrnehmungsfunktion trainiert wurde. Ist der mindestens eine Schwellenwert überschritten, wird daher mindestens eine Sicherheitsmaßnahme durchgeführt, um eine Sicherheit des Fahrzeugs aufrecht zu erhalten oder zu erhöhen.

Ferner wird darüber hinaus auch ein nicht beanspruchtes Verfahren zum Erkennen von Out-of-Sample-Daten einer maschinenlerngestützten Wahrnehmungsfunktion, insbesondere für ein zumindest teilautomatisiert fahrendes Fahrzeug, beschrieben, wobei mittels mindestens eines Sensors erfasste Sensordaten mittels eines Rekonstruktionsverfahrens rekonstruiert werden, wobei die erfassten Sensordaten und die rekonstruierten Sensordaten jeweils der Wahrnehmungsfunktion zugeführt werden, wobei zwischen Ausgaben, die jeweils mittels der Wahrnehmungsfunktion erzeugt werden, mittels eines Distanzmaßes eine Distanz bestimmt wird, wobei die bestimmte Distanz mit mindestens einem vorgegebenen Schwellenwert verglichen wird, und wobei ein Out-of-Sample-Signal erzeugt und bereitgestellt wird, wenn die bestimmte Distanz den mindestens einen vorgegebenen Schwellenwert überschreitet. Das Verfahren wird insbesondere mittels einer Datenverarbeitungseinrichtung ausgeführt.

Ein Vorteil der Verfahren und des Fahrzeugs ist, dass das Erkennen von adversarialen Störungen unabhängig von der konkreten Ausprägung der adversarialen Störung erfolgen kann. Hierdurch können insbesondere auch unbekannte und/oder neuartige adversariale Störungen erkannt und abgefangen werden. Hierzu ist insbesondere kein (erneutes) aufwändiges Trainieren der maschinenlerngestützten Wahrnehmungsfunktion notwendig, sodass Zeit und Kosten eingespart werden können und trotzdem ein hohes Maß an Sicherheit beim Verwenden der Wahrnehmungsfunktion aufrecht erhalten werden kann.

Die Wahrnehmungsfunktion ist insbesondere bereits vollständig trainiert. Insbesondere ist vorgesehen, dass (dieselbe) Wahrnehmungsfunktion auch beim (teil-)automatisierten Fahren des Fahrzeugs verwendet wird. Hierbei kann sowohl vorgesehen sein, dass eine auf Grundlage der erfassten Sensordaten erzeugte, insbesondere inferierte, Ausgabe der Wahrnehmungsfunktion beim (teil-)automatisierten Fahren berücksichtigt wird als auch, dass eine auf Grundlage der rekonstruierten Sensordaten erzeugte, insbesondere inferierte, Ausgabe der Wahrnehmungsfunktion berücksichtigt wird. Insbesondere ist vorgesehen, dass die Wahrnehmungsfunktion eine Funktion für das (teil-)automatisierte Fahren des Fahrzeugs und/oder für eine Fahrerassistenz des Fahrzeugs und/oder für eine Umfelderfassung und/oder Umfeldwahrnehmung bereitstellt. Die Wahrnehmungsfunktion kann beispielsweise eine Objekterkennung und/oder eine semantische Segmentierung an den erfassten Sensordaten durchführen.

Ein Sensor kann beispielsweise eine Kamera, eine Stereokamera, ein Lidar, ein Radar oder ein Ultraschallsensor sein.

Die Sensordaten des mindestens einen Sensors können prinzipiell eindimensional oder mehrdimensional, insbesondere zweidimensional, sein. Beispielsweise können die Sensordaten zweidimensionale Kamerabilder einer Kamera und/oder zweidimensionale Daten eines Lidar- oder Radarsensors sein.

Das Rekonstruktionsverfahren rekonstruiert die erfassten Sensordaten insbesondere auf Grundlage der Datendomäne, in der die Wahrnehmungsfunktion trainiert wurde.

Das Bestimmen der Distanz erfolgt auf Grundlage eines Distanzmaßes. Für Kamerabilder kann das Distanzmaß beispielsweise über einen euklidischen Abstand auf Bildelementvektoren definiert sein. Hierzu wird ein Kamerabild als Vektor linearisiert. Das Bestimmen eines Abstands erfolgt dann über eine Vektornorm, beispielsweise über die L2-Norm. Prinzipiell können jedoch auch andere Distanzmaße verwendet werden, beispielsweise auf Grundlage anderer Lp-Distanzen bzw. Lp-Normen. Für andere Arten von Sensordaten erfolgt das Bestimmen der Distanz prinzipiell auf dieselbe Weise.

Der mindestens eine Schwellenwert wird insbesondere empirisch, das heißt insbesondere mit Hilfe von gezielt präparierten Sensordaten, bestimmt. Hierbei können beispielsweise gezielt adversariale Störungen in zum Test vorgesehene Sensordaten integriert werden, um nach Verarbeiten der präparierten Sensordaten und von rekonstruierten präparierten Sensordaten durch die Wahrnehmungsfunktion eine hieraus resultierende Distanz zu bestimmen. Dieses Vorgehen kann beispielsweise für mehrere und/oder verschiedene adversariale Störungen durchgeführt werden. Anschließend kann auf Grundlage der jeweils bestimmten Distanzen ein Schwellenwert festgelegt werden. Dieser kann prinzipiell sowohl auf Grundlage der kleinsten bestimmten Distanz als auch auf Grundlage eines gewichteten Mittels oder sonstiger statistischer Größen etc. gewählt werden. Ferner können auch selten auftretende Sensordaten, sogenannte "Corner Cases", beispielsweise durch Simulation von Sensordaten gezielt erzeugt werden, um über eine hierfür bestimmte Distanz den mindestens einen Schwellenwert zu bestimmen. Es ist vorgesehen, dass mehr als ein Schwellenwert bestimmt wird. Dies ermöglicht es, Sicherheitsmaßnahmen in Abhängigkeit von unterschiedlichen Schwellenwerten auszuwählen, sodass beispielsweise hinsichtlich eines Umfanges abgestufte Sicherheitsmaßnahmen durchgeführt werden können.

Teile der Steuereinrichtung können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) ausgebildet sind.

Ein Fahrzeug ins insbesondere ein Kraftfahrzeug. Prinzipiell kann das Fahrzeug jedoch auch ein andere Land-, Schienen-, Luft-, Wasser- oder Raumfahrzeug sein.

Es ist insbesondere vorgesehen, dass das Verfahren fortlaufend wiederholt wird, sodass (aktuelle) erfasste Sensordaten fortlaufend überprüft werden können. Dies erfolgt insbesondere parallel zu einer regulären Auswertung der erfassten Sensordaten, die mittels der Wahrnehmungsfunktion durchgeführt wird.

In einer Ausführungsform ist vorgesehen, dass die maschinenlerngestützte Wahrnehmungsfunktion mittels eines trainierten Neuronalen Netzes bereitgestellt wird. Ein Neuronales Netz ist insbesondere ein tiefes Neuronales Netz, insbesondere ein Faltungsnetz (engl. Convolutional Neural Network, CNN). Das Neuronale Netz ist auf die Wahrnehmungsfunktion trainiert, beispielsweise auf eine Wahrnehmung von Fußgängern oder anderen Objekten in erfassten Kamerabildern.

In einer Ausführungsform ist vorgesehen, dass das Rekonstruktionsverfahren ein Quilting und/oder eine Total Variance Minimization und/oder ein Smoothening und/oder ein Denoising und/oder eine Kompression der erfassten Sensordaten umfasst. Derartige Verfahren sind beispielsweise aus Chuan Guo et al., Countering Adversarial Images Using Input Transformations, arXiv:1711.00117v3 [cs.CV], 25. Jan. 2018, https://arxiv.org/pdf/1711.00117.pdf, bekannt.

Das Quilting umfasst insbesondere das stückweise Ersetzen der erfassten Sensordaten, welches auch als stückweise Rekonstruktion der Sensordaten bezeichnet wird. Die Sensordaten werden hierzu in mehrere Teilausschnitte unterteilt. Im Falle von zweidimensionalen Sensordaten (z.B. in Form von Kamerabildern) werden hierzu kleine, insbesondere rechteckige Teilausschnitte (auch als Patches bezeichnet) definiert. Die einzelnen Teilausschnitte werden mit Teilausschnitten, nachfolgend als Sensordatenpatches bezeichnet, verglichen, die beispielsweise in einer Datenbank hinterlegt sind. Die Sensordatenpatches wurden hierbei aus der Datendomäne erzeugt, in der die Wahrnehmungsfunktion trainiert wurde. Der Vergleich erfolgt auf Grundlage eines Abstandsmaßes, welches beispielsweise über einen euklidischen Abstand auf Bildelementvektoren definiert ist. Hierzu wird ein Teilausschnitt als Vektor linearisiert. Das Bestimmen eines Abstands erfolgt dann über eine Vektornorm, beispielsweise über die L2-Norm. Zum Quilting werden die Teilausschnitte jeweils durch den nächstliegenden bzw. ähnlichsten Sensordatenpatch aus der Datenbank ersetzt. Es kann hierbei vorgesehen sein, dass ein Mindestabstand eingehalten werden muss bzw. dass zumindest keine Identität zwischen dem Teilausschnitt aus den Sensordaten und dem Sensordatenpatch vorliegen darf. Haben die Sensordaten eine andere Form bzw. ein anderes Format, so erfolgt das stückweise Ersetzen in analoger Weise.

In einer Ausführungsform ist vorgesehen, dass als Sicherheitsmaßnahme die Wahrnehmungsfunktion deaktiviert wird. Hierdurch kann verhindert werden, dass beim (teil-)automatisiert fahrenden Fahrzeug eine Steuerung des Fahrzeugs auf Grundlage von Ausgaben der Wahrnehmungsfunktion erfolgt, obwohl diese Ausgaben möglicherweise nicht vertrauenswürdig sind oder zu einer Fehlsteuerung des Fahrzeugs führen können. Insbesondere kann hierdurch verhindert werden, dass eine Ausgabe der Wahrnehmungsfunktion, die durch eine adversariale Störung in den Sensordaten manipuliert wurde, beim (teil-)automatisierten Fahren berücksichtigt wird.

In einer Ausführungsform ist vorgesehen , dass als Sicherheitsmaßnahme eine Konfidenz einer Ausgabe der Wahrnehmungsfunktion verändert wird. Hierdurch kann insbesondere ein Einfluss der Ausgabe der Wahrnehmungsfunktion auf eine Steuerung des automatisiert fahrenden Fahrzeugs verändert, insbesondere reduziert, werden. Beispielsweise kann nach Überschreiten des mindestens einen Schwellenwertes die Ausgabe hierdurch mit einer geringeren Gewichtung bei einer Entscheidungsfindung für das automatisierte Fahren berücksichtigt werden. Da mehrere Schwellenwerte vorgesehen sind, kann eine Stärke der Berücksichtigung, beispielsweise über eine entsprechend gewählte Konfidenz und/oder hiervon abhängige Gewichtung, auch in Abhängigkeit des jeweiligen Schwellenwertes gewählt werden. Insbesondere kann bei Ansteigen der bestimmten Distanz eine Konfidenz bzw. eine Gewichtung sukzessive reduziert werden.

In einer Ausführungsform ist vorgesehen, dass als Sicherheitsmaßnahme mindestens ein Konfidenzwert von erfassten Sensordaten mindestens eines Sensors verändert wird und/oder als Sicherheitsmaßnahme Sensordaten mindestens eines Sensors nicht mehr von der Wahrnehmungsfunktion berücksichtigt werden. Werden von der Wahrnehmungsfunktion Sensordaten mehrerer Sensoren berücksichtigt, so kann hierdurch Einfluss darauf genommen werden, welche Sensoren von der Wahrnehmungsfunktion mit welcher Stärke bzw. Gewichtung berücksichtigt werden, indem die Stärke bzw. die Gewichtung bei einer nachfolgenden Verarbeitung in Abhängigkeit der jeweiligen Konfidenz gewählt wird. Übersteigt beispielsweise eine für erfasste Kamerabilder bestimmte Distanz den mindestens einen Schwellenwert, eine für Lidardaten bestimmte Distanz den zugehörigen Schwellenwert hingegen nicht, so kann ein Konfidenzwert der Kamera verringert werden und/oder die Sensordaten der Kamera können (zumindest zeitweise) nicht mehr von der Wahrnehmungsfunktion berücksichtigt werden. Die Wahrnehmungsfunktion arbeitet dann (zumindest zeitweise) nur auf Grundlage der Lidardaten und Sensordaten von gegebenenfalls vorhandenen weiteren Sensoren. Wird der Schwellenwert wieder unterschritten, so kann die Kamera (bzw. der entsprechende Sensor) wieder berücksichtigt werden bzw. eine Konfidenz zugehöriger Sensordaten wieder erhöht werden.

Es kann vorgesehen sein, dass eine Konfidenz hierbei auch sensordatenabhängig und/oder objektabhängig verändert wird. Handelt es sich beispielsweise bei den Sensordaten um erfasste Kamerabilder, so können beispielsweise Konfidenzwerte für Objekte in einer mittels der Wahrnehmungsfunktion erstellten Segmentierungskarte für ein Kamerabild und ein rekonstruiertes Kamerabild miteinander verglichen werden. Die Konfidenzwerte zu den einzelnen Ausgaben der Wahrnehmungsfunktion werden mit an sich bekannten Verfahren bestimmt, bei einem Neuronalen Netz beispielsweise mittels (Monte Carlo) Drop-out-Samplings, bei dem einzelne Teile des Neuronalen Netzes zufällig deaktiviert werden und eine Ausgabe für verschiedene Deaktivierungen für die gleichen Sensordaten mehrmals erzeugt (inferiert) wird. Eine resultierende Verteilung der Ausgabe kann dann als Maß für die Konfidenz bzw. die Unsicherheit herangezogen werden. Weichen die Konfidenzwerte für das Kamerabild und das rekonstruierte Kamerabild für dasselbe Objekt stark voneinander ab, so kann ein Konfidenzwert für dieses Objekt bzw. diese Segmentierung reduziert werden. Mittels dieses Vorgehens kann aus der jeweils bestimmten Differenz eine Konfidenzkarte bzw. eine Unsicherheitskarte erstellt werden, sodass Untermengen der Sensordaten mit unterschiedlicher Konfidenz unterschiedliche stark bei einer nachfolgenden Verarbeitung, beispielsweise durch eine Fahrzeugsteuerung, berücksichtigt werden können.

In einer Ausführungsform ist vorgesehen, dass als Sicherheitsmaßnahme mindestens eine Sensorkonfiguration geändert wird. Hierdurch kann beispielsweise eine andere Anzahl von Sensoren und/oder eine andere Kombination von Sensoren verwendet werden. Weiter können hierdurch auch Parameter der Sensoren verändert werden. Beispielweise kann eine Auflösung einer Kamera oder eines Lidarsensors verändert werden.

In einer Ausführungsform ist vorgesehen, dass als Sicherheitsmaßnahme mindestens eine Rückfallstrategie für das automatisiert fahrende Fahrzeug aktiviert wird. Eine Rückfallstrategie umfasst insbesondere ein Umkonfigurieren einer Umfeldwahrnehmung und/oder einer Steuerung des (teil-)automatisiert fahrenden Fahrzeugs. Eine Rückfallstrategie kann beispielsweise das Rückfallen auf eine geringere Automatisierungsstufe umfassen. Eine Rückfallstrategie kann auch das Aktivieren und/oder Deaktivieren und/oder Umkonfigurieren von mindestens einem Sensor und/oder von einem zum (teil-)automatisierten Fahren verwendeten System des Fahrzeugs umfassen. Beispielsweise kann auf weniger genaue Sensoren und/oder weniger genau arbeitende Systeme zurückgegriffen werden. Ziel ist in jedem Fall, in einer aktuellen Situation durch die Rückfallstrategie vorgegebenes Maß an Sicherheit aufrecht zu erhalten oder die Sicherheit zu erhöhen.

In einer Ausführungsform ist vorgesehen, dass das automatisiert fahrende Fahrzeug als Sicherheitsmaßnahme in einen sicheren Zustand überführt wird. Ein solcher sicherer Zustand kann das Übernehmen der Steuerung durch einen menschlichen Fahrer beinhalten. Ferner kann auch vorgesehen sein, dass zum Erreichen des sicheren Zustands das Fahrzeug automatisiert an einen Straßenrand gefahren und dort gestoppt wird.

Es kann ferner vorgesehen sein, dass nach dem Überschreiten des mindestens einen Schwellenwertes eine Warnmeldung erzeugt und ausgegeben und/oder an einen Empfänger übermittelt wird. Dies ermöglicht es, Passagiere des Fahrzeugs und/oder einen Fahrzeughersteller und/oder Drittdienstleister auf das Vorliegen von Out-of-Sample-Daten aufmerksam zu machen. Insbesondere ist es möglich, dass ein Fahrzeughersteller und/oder der Drittdienstleister auf Grundlage der übermittelten Warnmeldung die Wahrnehmungsfunktion anpasst bzw. aktualisiert, insbesondere nachtrainiert.

Weitere Merkmale zur Ausgestaltung des Fahrzeugs ergeben sich aus der Beschreibung von Ausgestaltungen des Verfahrens. Die Vorteile der Vorrichtung sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Fahrzeugs;
- Fig. 2: ein schematisches Flussdiagramm zur Verdeutlichung des Verfahrens zum Detektieren von Out-of-Sample-Daten.

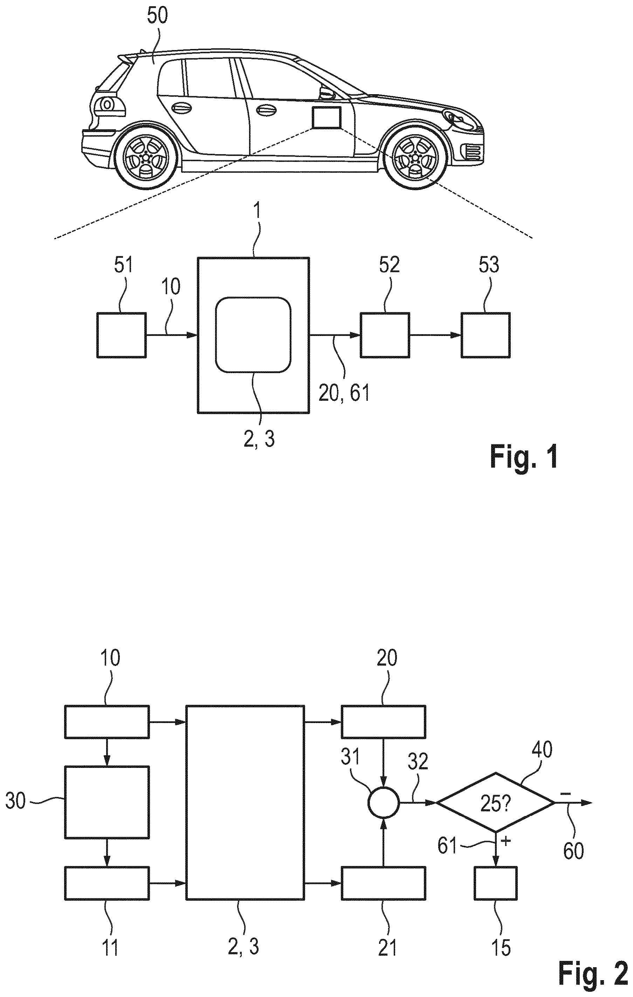

In Fig. 1 ist eine schematische Darstellung einer Ausführungsform des Fahrzeugs 50 gezeigt. Das Fahrzeug 50 umfasst einen Sensor 51, beispielsweise eine Kamera, mit dem ein Umfeld des Fahrzeugs 50 erfasst wird. Ferner umfasst das Fahrzeug 50 eine Steuereinrichtung 1. Die Steuereinrichtung 1 ist beispielsweise als eine Kombination von Hardware und Software ausgebildet sein, beispielsweise als Programmcode, der auf einem Mikrocontroller oder Mikroprozessor ausgeführt wird.

Die Steuereinrichtung 1 stellt eine maschinenlerngestützte Wahrnehmungsfunktion 2 bereit. Die Wahrnehmungsfunktion 2 wird insbesondere in Form eines trainierten tiefen Neuronales Netzes 3 bereitgestellt. Die Wahrnehmungsfunktion 2 erkennt beispielsweise Objekte in den erfassten Sensordaten 10 oder führt eine semantische Segmentierung durch etc. und liefert eine Ausgabe 20, die anschließend einer Fahrzeugsteuerung 52 zugeführt wird, welche eine Aktorik 53 des Fahrzeugs 50 zumindest auch in Abhängigkeit von der Ausgabe 20 ansteuert bzw. regelt. Ferner führt die Steuereinrichtung 1 das in dieser Offenbarung beschriebene Verfahren aus.

In Fig. 2 ist ein Kernelement einer Ausführungsform des in dieser Offenbarung beschriebenen Verfahrens in Form eines schematischen Flussdiagramms verdeutlicht, nämlich das Erkennen von Out-of-Sample-Daten. Beispielhaft sei davon ausgegangen, dass die erfassten Sensordaten 10 ein Kamerabild umfassen.

Die erfassten Sensordaten 10 werden mittels eines Rekonstruktionsverfahrens 30, beispielsweise eines Quilting-Verfahrens, rekonstruiert, sodass rekonstruierte Sensordaten 11 bereitgestellt werden können.

Ferner kann auch vorgesehen sein, dass das Rekonstruktionsverfahren 30 zusätzlich oder alternativ eine Total Variance Minimization und/oder ein Smoothening und/oder ein Denoising und/oder eine Kompression der erfassten Sensordaten 10 umfasst.

Die erfassten Sensordaten 10 und die rekonstruierten Sensordaten 11 werden jeweils der trainierten Wahrnehmungsfunktion 2, insbesondere dem trainierten tiefen Neuronalen Netz 3, zugeführt. Die trainierte Wahrnehmungsfunktion 2 erzeugt, insbesondere inferiert, sowohl für die erfassten Sensordaten 10 als auch für die rekonstruierten Sensordaten 11 jeweils eine Ausgabe 20, 21.

Zwischen den Ausgaben 20, 21 wird mittels eines Distanzmaßes 31 eine Distanz 32 bestimmt. Als Distanzmaß 31 kann beispielsweise eine Lp-Distanz bzw. eine Lp-Norm, beispielsweise die L2-Norm, verwendet werden.

In einem Überprüfungsschritt 40 wird die bestimmte Distanz 32 mit einem vorgegebenen Schwellenwert 25 verglichen. Ergibt die Überprüfung, dass der Schwellenwert 25 nicht überschritten ist, so wird ein In-Sample-Signal 60 erzeugt. Ergibt die Überprüfung hingegen, dass der Schwellenwert 25 überschritten ist, so wird ein Out-of-Sample-Signal 61 erzeugt, das beispielsweise an die Fahrzeugsteuerung 52 (vgl. Fig. 1) übermittelt wird.

Nach dem Übermitteln des Out-of-Sample-Signals 61 wird mindestens eine Sicherheitsmaßnahme 15 ausgeführt, beispielsweise mittels der Fahrzeugsteuerung 52 (Fig. 1).

Es kann vorgesehen sein, dass als Sicherheitsmaßnahme 15 die Wahrnehmungsfunktion 2 deaktiviert wird.

Es kann vorgesehen sein, dass als Sicherheitsmaßnahme 15 eine Konfidenz einer Ausgabe 20 der Wahrnehmungsfunktion 2 verändert wird.

Weiter kann vorgesehen sein, dass als Sicherheitsmaßnahme 15 mindestens ein Konfidenzwert von erfassten Sensordaten 10 mindestens eines Sensors 51 verändert wird und/oder als Sicherheitsmaßnahme 15 Sensordaten 10 mindestens eines Sensors 51 nicht mehr von der Wahrnehmungsfunktion 2 berücksichtigt werden.

Es kann vorgesehen sein, dass als Sicherheitsmaßnahme 15 mindestens eine Sensorkonfiguration geändert wird. Beispielsweise können andere Kombinationen von Sensoren 51 (Kamera, Lidar, Radar, Ultraschall etc.) verwendet werden und/oder Parameter von Sensoren 51 können geändert werden.

Es kann vorgesehen sein, dass als Sicherheitsmaßnahme 15 mindestens eine Rückfallstrategie für das (teil-)automatisiert fahrende Fahrzeug 50 aktiviert wird. Dies erfolgt beispielsweise, nachdem das Out-of-Sample-Signal 61 von der Fahrzeugsteuerung 52 empfangen wurde.

Es kann vorgesehen sein, dass das Fahrzeug 50 als Sicherheitsmaßnahme 15 in einen sicheren Zustand überführt wird. Hierzu steuert die Fahrzeugsteuerung 52 das Fahrzeug 50 bzw. eine Aktorik 53 des Fahrzeugs 50 beispielsweise derart an, dass das Fahrzeug 50 an einem Straßenrand zum Stehen kommt oder die Fahrzeugsteuerung 52 reduziert einen Automatisierungsgrad und/oder deaktiviert bestimmte Assistenzfunktionen des Fahrzeugs 50, welche von den Out-of-Sample-Daten bzw. dem zugehörigen Sensor 51 betroffen sind.

### Bezugszeichenliste

- 1: Steuereinrichtung
- 2: Wahrnehmungsfunktion
- 3: tiefes Neuronales Netz
- 10: Sensordaten
- 11: rekonstruierte Sensordaten
- 15: Sicherheitsmaßnahme
- 20: Ausgabe (Sensordaten)
- 21: Ausgabe (rekonstruierte Sensordaten)
- 25: Schwellenwert
- 30: Rekonstruktionsverfahren
- 31: Distanzmaß
- 32: Distanz
- 40: Überprüfungsschritt
- 50: Fahrzeug
- 51: Sensor
- 52: Fahrzeugsteuerung
- 53: Aktorik
- 60: In-Sample-Signal
- 61: Out-of-Sample-Signal

## Patentansprüche

1. Verfahren zum Betreiben eines zumindest teilautomatisiert fahrenden Fahrzeugs (50), wobei Sensordaten (10) mittels mindestens eines Sensors (51) erfasst werden,
wobei die erfassten Sensordaten (10) mittels eines Rekonstruktionsverfahrens (30) rekonstruiert werden,
wobei die erfassten Sensordaten (10) und die rekonstruierten Sensordaten (11) jeweils einer maschinenlerngestützten Wahrnehmungsfunktion (2) zugeführt werden,
wobei zwischen Ausgaben (20, 21), die jeweils mittels der Wahrnehmungsfunktion (2) erzeugt werden, mittels eines Distanzmaßes (31) eine Distanz (32) bestimmt wird, wobei die bestimmte Distanz (32) mit mindestens einem vorgegebenen Schwellenwert (25) verglichen wird, und
wobei mindestens eine Sicherheitsmaßnahme (15) durchgeführt wird, wenn die bestimmte Distanz (32) den mindestens einen vorgegebenen Schwellenwert (25) überschreitet,
wobei mehrere unterschiedliche Schwellenwerte (25) vorgegeben sind, und wobei Sicherheitsmaßnahmen (15) in Abhängigkeit von den unterschiedlichen Schwellenwerten (25) ausgewählt werden.

2. Verfahren nach Anspruch 1, **dadurch gekennzeichnet, dass** das
Rekonstruktionsverfahren (30) ein Quilting und/oder eine Total Variance Minimization und/oder ein Smoothening und/oder ein Denoising und/oder eine Kompression der erfassten Sensordaten (10) umfasst.

3. Verfahren nach einem der vorangegangenen Ansprüche, **dadurch gekennzeichnet, dass** als Sicherheitsmaßnahme (15) die Wahrnehmungsfunktion (2) deaktiviert wird.

4. Verfahren nach einem der vorangegangenen Ansprüche, **dadurch gekennzeichnet, dass** als Sicherheitsmaßnahme (15) eine Konfidenz einer Ausgabe (20) der Wahrnehmungsfunktion (2) verändert wird.

5. Verfahren nach einem der vorangegangenen Ansprüche, **dadurch gekennzeichnet, dass** als Sicherheitsmaßnahme (15) mindestens ein Konfidenzwert von erfassten Sensordaten (10) mindestens eines Sensors (51) verändert wird und/oder als Sicherheitsmaßnahme (15) Sensordaten (10) mindestens eines Sensors (51) nicht mehr von der Wahrnehmungsfunktion (2) berücksichtigt werden.

6. Verfahren nach einem der vorangegangenen Ansprüche, **dadurch gekennzeichnet, dass** als Sicherheitsmaßnahme (15) mindestens eine Sensorkonfiguration geändert wird.

7. Verfahren nach einem der vorangegangenen Ansprüche, **dadurch gekennzeichnet, dass** als Sicherheitsmaßnahme (15) mindestens eine Rückfallstrategie für das automatisiert fahrende Fahrzeug (50) aktiviert wird.

8. Verfahren nach einem der vorangegangenen Ansprüche, **dadurch gekennzeichnet, dass** das automatisiert fahrende Fahrzeug (50) als Sicherheitsmaßnahme (15) in einen sicheren Zustand überführt wird.

9. Fahrzeug (50), wobei das Fahrzeug (50) zumindest teilautomatisiert gefahren wird, umfassend:
mindestens einen Sensor (51),
wobei der mindestens eine Sensor (51) dazu eingerichtet ist, Sensordaten (10) zu erfassen, und eine Steuerungseinrichtung (1),
wobei die Steuerungseinrichtung (1) dazu eingerichtet ist, eine maschinenlerngestützte Wahrnehmungsfunktion (2) bereitzustellen, die erfassten Sensordaten (10) mittels eines Rekonstruktionsverfahrens (30) zu rekonstruieren, die erfassten Sensordaten (10) und die rekonstruierten Sensordaten (11) jeweils der Wahrnehmungsfunktion (2) zuzuführen,
zwischen Ausgaben (20, 21), die jeweils mittels der Wahrnehmungsfunktion (2) erzeugt werden, mittels eines Distanzmaßes (31) eine Distanz (32) zu bestimmen, die bestimmte Distanz (32) mit mindestens einem vorgegebenen Schwellenwert (25) zu vergleichen, und mindestens eine Sicherheitsmaßnahme (15) durchzuführen, wenn die bestimmte Distanz (32) den mindestens einen vorgegebenen Schwellenwert (25) überschreitet,
wobei mehrere unterschiedliche Schwellenwerte (25) vorgegeben sind, und wobei Sicherheitsmaßnahmen (15) in Abhängigkeit von den unterschiedlichen Schwellenwerten (25) ausgewählt werden.

## Claims

1. Method for operating an at least partially automatedly driving vehicle (50),
wherein sensor data (10) are captured by means of at least one sensor (51),
wherein the captured sensor data (10) are reconstructed by means of a reconstruction method (30),
wherein the captured sensor data (10) and the reconstructed sensor data (11) are both supplied to a machine-learning-based perception function (2),
wherein, by means of a distance measure (31), a distance (32) is determined between outputs (20, 21) which are each generated by means of the perception function (2),
wherein the determined distance (32) is compared with at least one predefined threshold value (25), and
wherein at least one safety measure (15) is implemented when the determined distance (32) exceeds the at least one predefined threshold value (25),
wherein a plurality of different threshold values (25) are predefined, and wherein safety measures (15) are selected depending on the different threshold values (25).

2. Method according to claim 1, **characterized in that** the reconstruction method (30) comprises quilting and/or total variance minimization and/or smoothing and/or denoising and/or compression of the captured sensor data (10).

3. Method according to either of the preceding claims,
**characterized in that,** as a safety measure (15), the perception function (2) is deactivated.

4. Method according to any of the preceding claims, **characterized in that,** as a safety measure (15), confidence relating to an output (20) of the perception function (2) is changed.

5. Method according to any of the preceding claims, **characterized in that,** as a safety measure (15), at least one confidence value relating to captured sensor data (10) of at least one sensor (51) is changed and/or, as a safety measure (15), sensor data (10) of at least one sensor (51) are no longer taken into account by the perception function (2).

6. Method according to any of the preceding claims, **characterized in that,** as a safety measure (15), at least one sensor configuration is modified.

7. Method according to any of the preceding claims, **characterized in that,** as a safety measure (15), at least one fallback strategy for the automatedly driving vehicle (50) is activated.

8. Method according to any of the preceding claims, **characterized in that,** as a safety measure (15), the automatedly driving vehicle (50) is transitioned into a safe state.

9. Vehicle (50), wherein the vehicle (50) is driven at least partially automatedly, comprising:
at least one sensor (51),
wherein the at least one sensor (51) is configured to capture sensor data (10), and a control device (1),
wherein the control device (1) is configured to provide a machine-learning-based perception function (2), to reconstruct the captured sensor data (10) by means of a reconstruction method (30), to supply both the captured sensor data (10) and the reconstructed sensor data (11) to the perception function (2), to determine, by means of a distance measure (31), a distance (32) between outputs (20, 21) which are each generated by means of the perception function (2), to compare the determined distance (32) with at least one predefined threshold value (25), and to implement at least one safety measure (15) when the determined distance (32) exceeds the at least one predefined threshold value (25), wherein a plurality of different threshold values (25) are predefined, and wherein safety measures (15) are selected depending on the different threshold values (25).

## Revendications

1. Procédé permettant de faire fonctionner un véhicule (50) à conduite au moins partiellement automatisée,
dans lequel des données de capteur (10) sont détectées au moyen d'au moins un capteur (51),
dans lequel les données de capteur (10) détectées sont reconstruites au moyen d'un procédé de reconstruction (30),
dans lequel les données de capteur (10) détectées et les données de capteur reconstruites (11) sont respectivement amenées à une fonction de perception (2) basée sur l'apprentissage automatique,
dans lequel une distance (32) est déterminée au moyen d'une mesure de distance (31) entre des sorties (20, 21) qui sont respectivement générées au moyen de la fonction de perception (2),
dans lequel la distance (32) déterminée est comparée à au moins une valeur seuil (25) prédéterminée, et
dans lequel au moins une mesure de sécurité (15) est mise en œuvre lorsque la distance (32) déterminée dépasse par le haut l'au moins une valeur seuil (25) prédéterminée,
dans lequel plusieurs valeurs seuils (25) différentes sont prédéfinies, et dans lequel des mesures de sécurité (15) sont sélectionnées en fonction des différentes valeurs seuils (25).

2. Procédé selon la revendication 1, **caractérisé en ce que** le procédé de reconstruction (30) comprend un partitionnement et/ou une minimisation de variance totale et/ou un lissage et/ou un débruitage et/ou une compression des données de capteur (10) détectées.

3. Procédé selon l'une des revendications précédentes,
**caractérisé en ce que,** comme mesure de sécurité (15), la fonction de perception (2) est désactivée.

4. Procédé selon l'une des revendications précédentes,
**caractérisé en ce que,** comme mesure de sécurité (15), une confiance d'une sortie (20) de la fonction de perception (2) est modifiée.

5. Procédé selon l'une des revendications précédentes,
**caractérisé en ce que** comme mesure de sécurité (15), au moins une valeur de confiance de données de capteur (10) détectées d'au moins un capteur (51) est modifiée et/ou, comme mesure de sécurité (15), des données de capteur (10) d'au moins un capteur (51) ne sont plus prises en compte par la fonction de perception (2).

6. Procédé selon l'une des revendications précédentes,
**caractérisé en ce que,** comme mesure de sécurité (15), au moins une configuration de capteur est modifiée.

7. Procédé selon l'une des revendications précédentes,
**caractérisé en ce que,** comme mesure de sécurité (15), au moins une stratégie de repli est activée pour le véhicule (50) à conduite automatisée.

8. Procédé selon l'une des revendications précédentes,
**caractérisé en ce que** le véhicule (50) à conduite automatisée est amené, comme mesure de sécurité (15), dans un état sûr.

9. Véhicule (50), dans lequel le véhicule (50) est conduit de manière au moins partiellement automatisée, comprenant :
au moins un capteur (51),
dans lequel l'au moins un capteur (51) est configuré pour détecter des données de capteur (10), et un dispositif de commande (1),
dans lequel le dispositif de commande (1) est configuré pour fournir une fonction de perception (2) basée sur l'apprentissage automatique, pour reconstruire les données de capteur (10) détectées au moyen d'un procédé de reconstruction (30), pour fournir les données de capteur (10) détectées et les données de capteur reconstruites (11) respectivement à la fonction de perception (2), pour déterminer une distance (32) entre des sorties (20, 21) qui sont générées respectivement au moyen de la fonction de perception (2), au moyen d'une mesure de distance (31), pour comparer la distance (32) déterminée avec au moins une valeur seuil (25) prédéfinie, et pour exécuter au moins une mesure de sécurité (15) lorsque la distance (32) déterminée dépasse par le haut l'au moins une valeur seuil (25) prédéfinie, dans lequel plusieurs valeurs seuils (25) différentes sont prédéfinies, et dans lequel des mesures de sécurité (15) sont sélectionnées en fonction des différentes valeurs seuils (25).
